# EUROPEAN PATENT SPECIFICATION

(11) **EP 1 894 670 B1**
(45) Date of publication and mention of the grant of the patent: **25.05.2011**
(21) Application number: 05786096.7
(22) Date of filing: 28.07.2005
(51) Int. Cl.: B23Q 11/00, F16C 32/04, B23Q 1/70

(54) **TOOLHOLDER COMPRISING A SUCTION SYSTEM**
EIN SAUGSYSTEM UMFASSENDER WERKZEUGHALTER
PORTE-OUTILS A SYSTEME D'ASPIRATION

(30) Priority: 10.06.2005 ES 200501394
(43) Date of publication of application: 05.03.2008
(60) Divisional application: 10013272.9
(73) Proprietor: Loxin 2002, S.L., E-31013 Pamplona (ES)
(72) Inventor: BAIGORRI HERMOSO, Julián, 31013 Pamplona (ES)
(74) Representative: Schäfer, Matthias W.
(86) International application number: PCT/ES2005/000430
(87) International publication number: WO 2006/134180

(56) References cited:
- EP-A- 1 066 916
- EP-A- 1 279 464
- EP-A2- 1 066 916
- WO-A1-02/32618
- JP-A- 08 071 884
- JP-A- 08 071 884
- JP-A- 59 030 634
- JP-A- 61 008 245
- US-A- 4 563 115
- US-A- 4 563 115
- US-A- 5 017 060
- US-A- 5 474 116
- US-A- 5 791 842
- US-A- 5 791 842
- US-A1- 2005 067 907

## Description

This patent document relates, as its title indicates, to a tool holder with suction system of the type used in automatic machining system with numerical control for the adaptation and securing of different machining tools, characterised in that it integrates in a single device the functionality of a conventional automatic tool holder, which can convey a retractable element for improving precision in the control of the depth of machining, and a suction system for the powder and swarf generated during the process, enabling in another alternative embodiment the use of a plurality of slide guides in the retractable elements for improving the sliding of the sensing element.

Multiple and varied types of tool holders for their use in automatic machining systems with numerical control are currently widely known. The function of these tool holders is the mechanical adaptation between the actual machining tool, for example a milling cutter, drill bit, and others, and the motor arm of the machine. The tool holders may essentially be of two types: fixed and retractable. In the fixed type the depth of machining may be controlled only by the coordinates supplied by the numerical control system that controls the automatic machining system. In the retractable type the tool holder itself allows a complementary dynamic correction of the machining depth coordinate to be effected in accordance with the possible imperfections or warped nature of the material to be machined, thereby achieving much greater precision.

During the standard process of machining the material, both types of tool holder, together with their corresponding connected tool, produce waste of different types, ranging from powder to swarf. This waste must be eliminated from the working surfaces and their surroundings for various reasons, principally because they may slow the work down and affect the precision of subsequent machining operations performed in the area around the same point, or even cause damage to the surface of the material (particularly in the case of swarf), although they may also be dangerous or even toxic for personnel in the vicinity of the machine, depending on the material that is being worked on. It should not be forgotten either that their elimination makes subsequent cleaning of the work premises easier to carry out.

In order to eliminate this waste, a wide variety of systems external to the tool holder are commonly known and have traditionally been used, such as manual or semi-automatic brushing, blowing by means of pressurized air channelled though a pipe, or suction by means of an external hood situated around the machining tool and the tool holder. Given their specific construction, they all present a limited effectiveness with a high percentage of wastage as they cause the suction or expulsion of waste in the areas around the machining point. Furthermore, the necessary suction pipes frequently lead to problems, become entangled and cause breakdowns both during normal operating and during the tool changing process. In addition they also suffer from a series of secondary problems mainly due to the fact that their adaptation to automatic machining systems is problematic and awkward, necessitating a complexity that impacts negatively on the functionality of the machine, increasing the time required for each operation and the economic cost of the machining.

Other solutions have been sought. For example patent US4101238 "Hole saw with particle-aspirating accessory for hand drill" presents a crown saw for forming large circular drill holes with hand drills and similar tools, provided with a simple particle-aspirating mechanism, but which suffers from the problem of using the actual crown saw as the suction hood, as a result of which the particles generated outside the cutting line cannot be aspirated. This system is designed for use solely in manual tools and cannot easily be applied to automatic machining systems.

Patent GB2082099 "Drilling chuck with jaw for hand drill", equivalent to EP0045754, presents a suction system for a hand-drill tool holder, without an extractor hood, suction being performed by means of an axial channel in the drill bit itself or similar tool. In addition to the fact that, due to its specific construction, it does not allow suction of the entire working area, it also present a serious problem in that it requires special drill bits or tools incorporating a suction channel, which makes them much more expensive and weaker. Furthermore, it is only designed for hand tools.

Other variations of this type of tool with a suction channel running through the machining tools themselves (drill bits, milling cutters, crown saws, etc) are protected by patents ES2102918 "Device for suctioning swarf by means of a hollow drill bit"; EP0558817 "Hollow milling cutter with device for evacuating powder"; EP0855244 "Suction device for a machine tool, especially for a drilling machine or a drilling-hammering machine"; and EP0738558 "Unit for swarf generated by a hollow milling tool". These all suffer from the same aforementioned drawbacks and problems: they are preferably suited to manual rather than automatic machines, and require a special machine tool that is not standard on the market, either hollow or with a suction channel, which presents the additional disadvantage of causing the absorption of particles only through the interior and not by one side of the tool, as a result of which the waste generated cannot be absorbed correctly.

EP-1066 916 discloses a tool holder according to the preamble of claim 1.

It is an object of the present invention to solve the above-mentioned problems. This object is achieved by a tool holder with suction system having the features of claim 1. Advantageous embodiments of the present invention are described in the dependent claims.

An alternative embodiment is provided for, with a plurality of guide-columns of a smaller diameter, preferably three, distributed in the shape of a circular matrix around the securing cone and each one of these guide-columns being provided with the corresponding anti-friction elements, preferably in the form of bearings, and the corresponding internal springs in order to favour the rest state of the cylindrical unit.

The tool holder with suction system that is being presented provides multiple advantages over the systems currently available, the most important of which being that as everything is integrated into a single device, the automatic machining system does not have to spend any time positioning any auxiliary cleaning system, as a result of which the operating times are not affected, thereby bringing about cost improvements in process performance.

Another important advantage is that, as the tool holder with suction system is provided with the functionality of standard tool holders, it accepts conventional machining tools, such as milling cutters, drill bits, and countersink bits, without the need for these to be hollow or to be provided with any special channel. Furthermore, the cone providing the fastening to the machine may be any of those known and common on the market.

Another advantage of the present invention is that, as the suction nozzle is situated around the machining tool, the suction of all the waste generated, both powder and swarf, takes place exactly at the point of machining, with the subsequent cleaning and improvement in the precision of the machining, as this prevents the possibility that swarf may slightly deflect the head of the machining tool during the process. Furthermore, as it is detachable and easily interchangeable, this suction nozzle may be optimised both in terms of size and in terms of type for the different types of machining tools fitted into the tool holder.

Another of the most important advantages offered by this tool holder is that the same suction system can be applied both to fixed-type tool holders and to those provided with a retractable element. The latter present a major advantage over known conventional systems in that, as the suction nozzle is connected to the retractable front element of the tool holder, the suction process and precision adapts perfectly to the variations originating from the aforementioned retractable element.

Another additional advantage is the fact that as both the fixed-type tool holder and the retractable type share the same connection elements, the two types may coexist perfectly in the tool holder storage device of the automatic machining system, with a consequent improvement in the flexibility and adaptation to the various functions to be performed.

The alternative embodiment of the tool holder with suction system provided with a plurality of guide-columns presents the important additional advantage of eliminating the need to dispose of an anti-rotation lock or stopper, which is necessary in the retractable tool holder with single guide-column, while at the same time, thanks to the guidance provided by various guide-columns, possible swaying and error is reduced due to the variation of the horizontal angle during vertical movement, thereby contributing greatly to the machining precision of this tool holder.

In order to better understand the object of the present invention, the attached drawings show a preferred practical embodiment of a retractable-type tool holder, an example of a fixed-type tool holder which is not part of the present invention, both with suction, and a final example of a preferred practical embodiment of a retractable-type tool holder with suction, with a plurality of guide-columns.

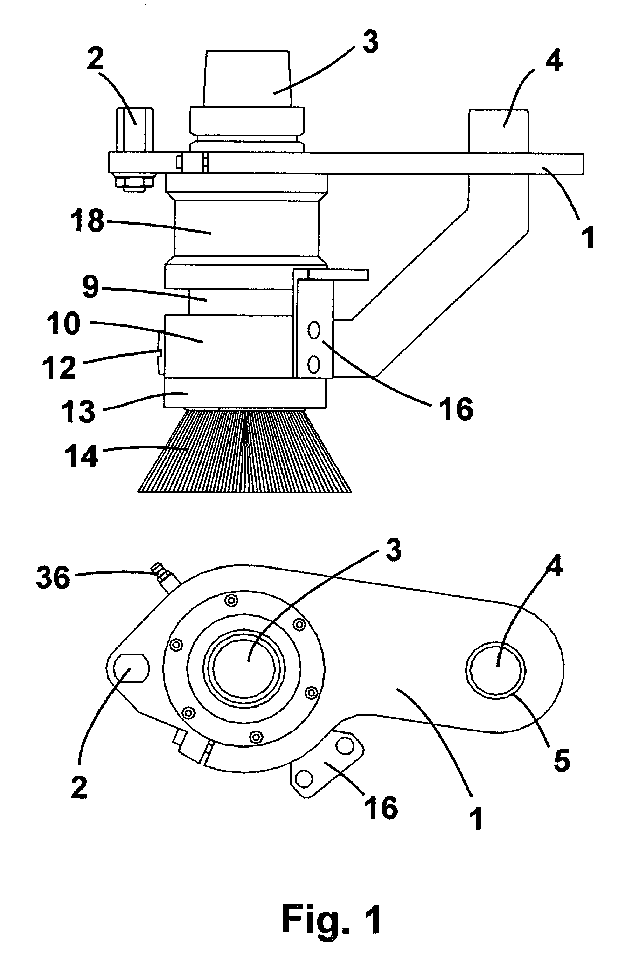

In said drawings Figure 1 shows a front and upper view of the retractable-type tool holder with suction.

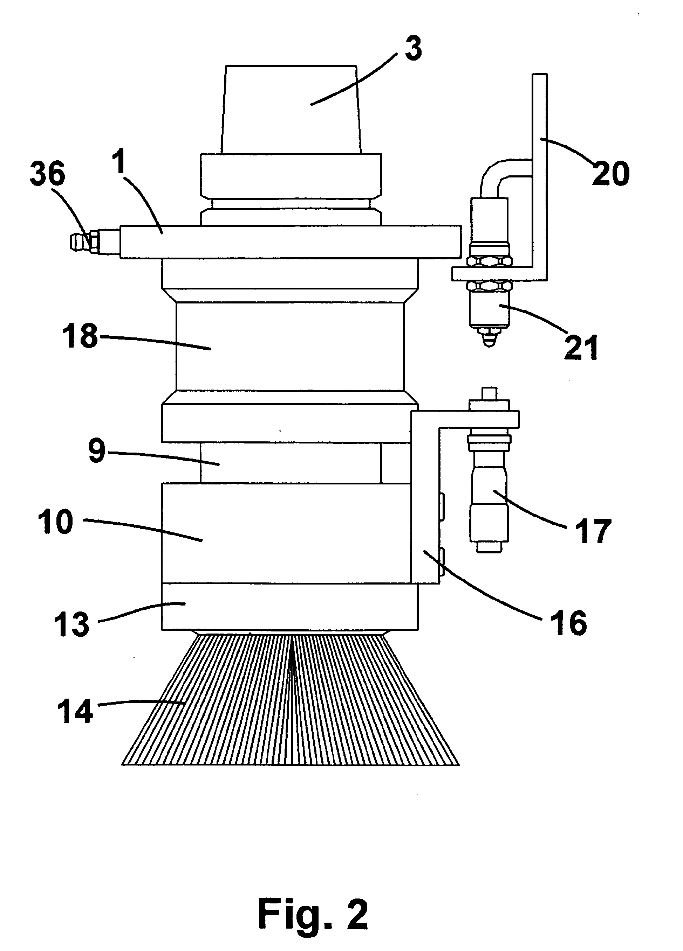

Figure 2 shows a side view of the retractable-type tool holder with suction, incorporating the micrometric head units and end-of-stroke switches.

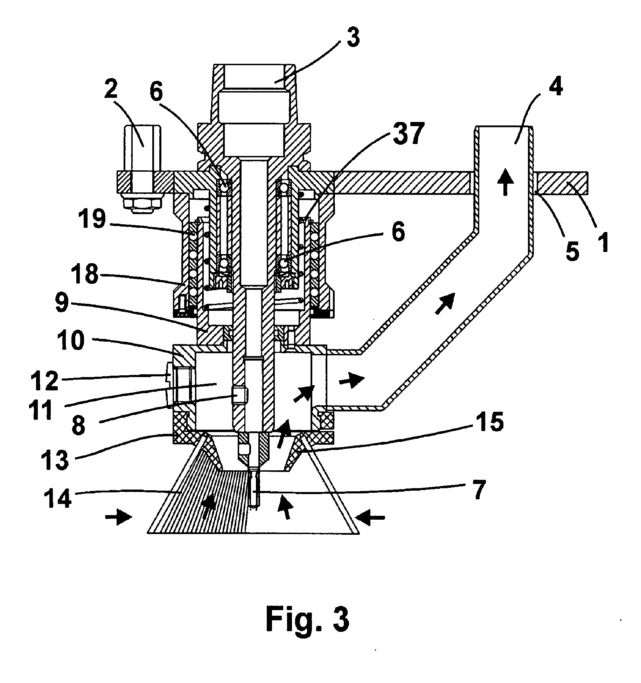

Figure 3 shows a cross-sectional view of the retractable-type tool holder with suction, and indicates the path travelled by the air current for the suction of waste.

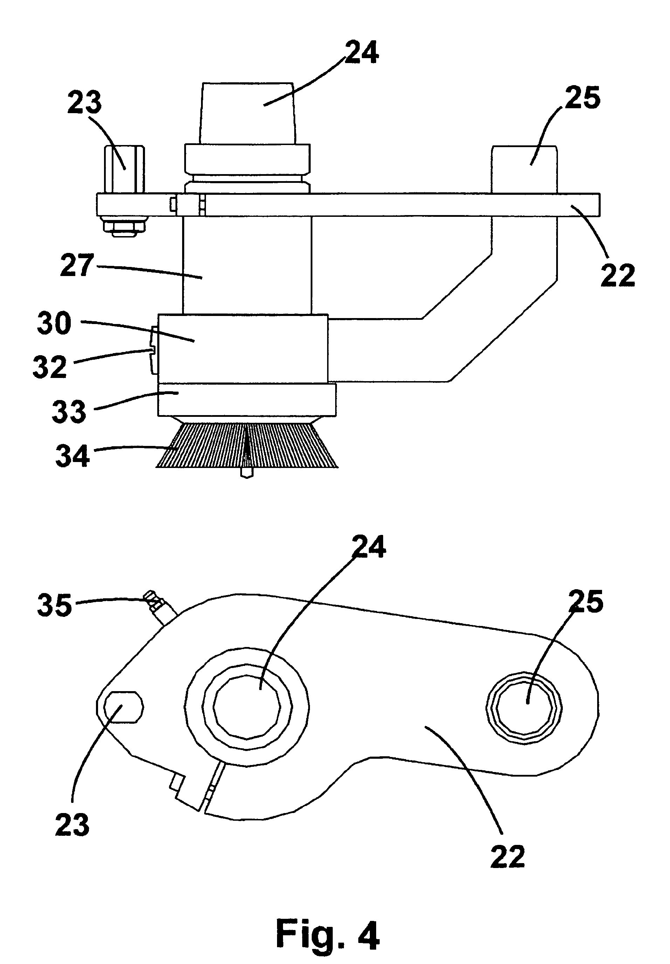

Figure 4 shows a front and upper view of a fixed-type tool holder with suction, which is not part of the present invention.

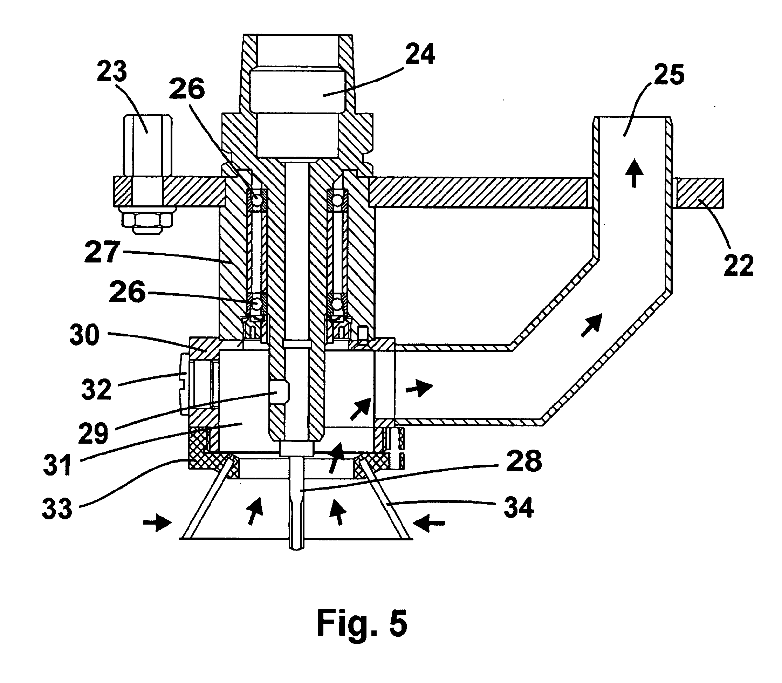

Figure 5 shows a cross-sectional view of the fixed-type tool holder with suction which is not part of the present invention, and indicates the path travelled by the air current for the suction of waste.

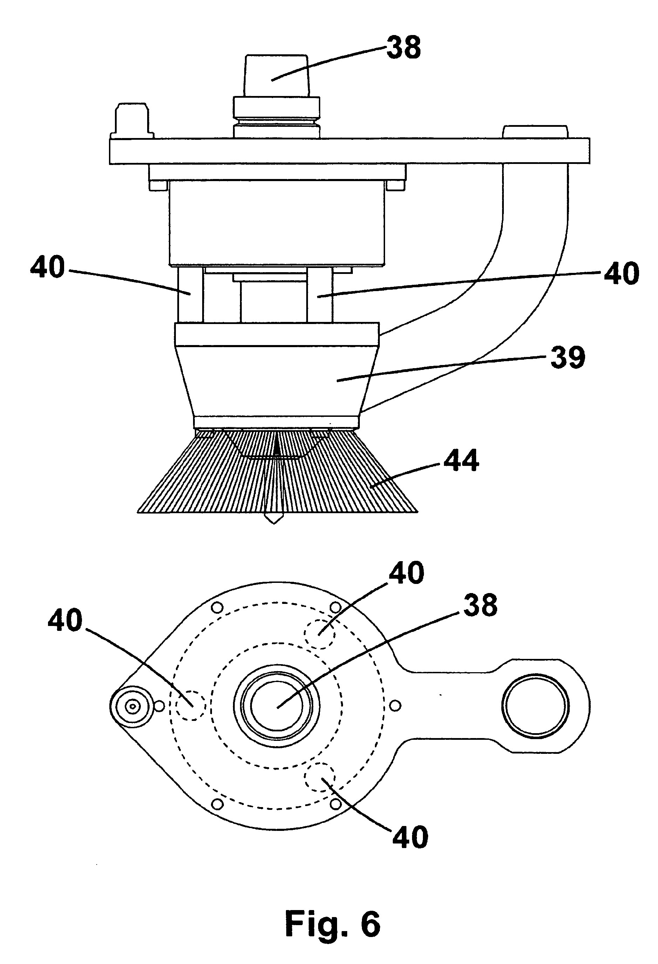

Figure 6 shows an external side and upper view of the retractable-type tool holder with suction and a plurality of guide-columns.

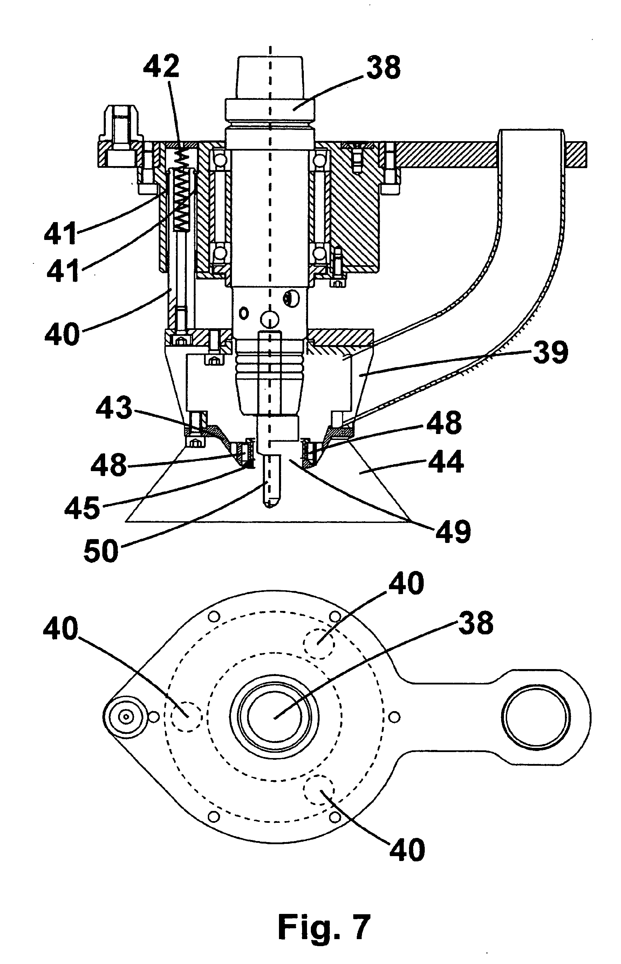

Figure 7 shows a sectional side and upper view of the retractable-type tool holder with suction, and a plurality of guide-columns, showing the extraction pipe.

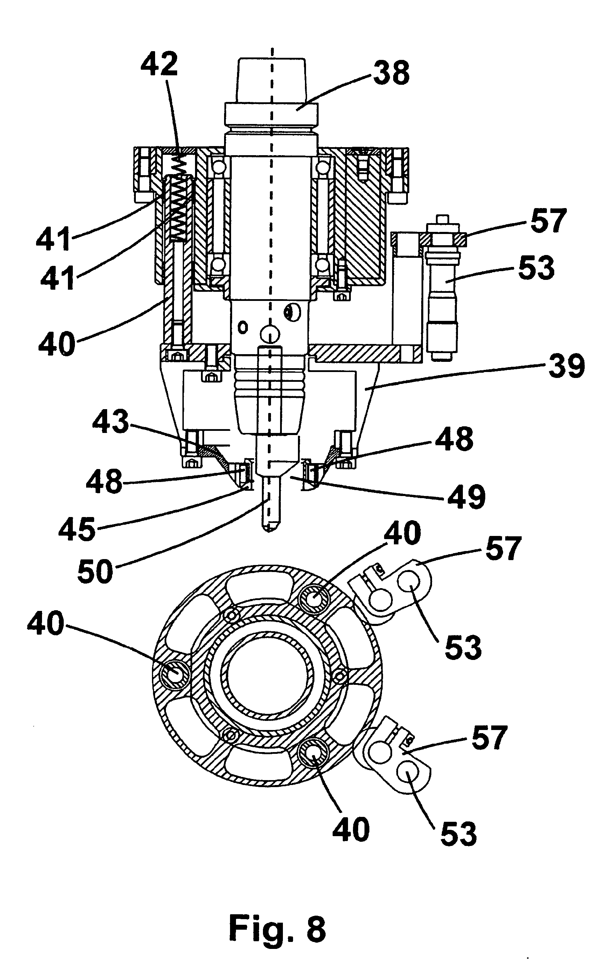

Figure 8 shows a sectional side and intermediate view of the retractable-type tool holder with suction, and a plurality of guide-columns, showing the micrometric head units used in the end-of-stroke sensors, with the suction hood removed in order to facilitate the detail.
Figure 9 shows a front view and a side view of the retractable-type tool holder, having a plurality of guide-columns and a modified sensing device, connected to the motor arm of the machine or spindle, detailing the associated micrometric head units and end-of-stroke micro switches for adjusting the depth, with the suction pipe connected to the external extractor system.

The tool holder with suction system that is the object of this invention, is essentially formed, in its retractable version, as can be seen in the attached plan, by a flat support (1), of an appreciable thickness and variable elongated shape, to which is attached in its upper part a positioning bolt (2), the securing cone (3), which is the upper end of the main rotating axis, and the outlet of the suction pipe (4), with the possibility of vertical movement in relation to the support (1) by means of appropriate free movement in the through hole (5) of the support (1). The securing cone may have the specific measurements and shapes of any of the different types of securing cone that are standard on the market. It is in these three elements that the connection with the arm of the automatic machining system is made.

The securing cone (3) is provided with high-precision, low-sway rotary movement in relation to the support (1) by means of the appropriate internal bearings (6). In the hollow lower part of the bottom of the main shaft is housed the machine tool (7), it being held by the lateral fixing screw (8).

On this securing cone (3) is concentrically disposed the cylindrical unit (9); provided with vertical movement in relation to the aforementioned securing cone (3), and to the lower part of which is attached the suction support (10), also of a hollow cylindrical shape and which forms the internal suction chamber (11) in its interior and around the lower end of the securing cone (3). Emerging laterally from this suction support (10) is the suction pipe (4). This suction support (10) is also disposed with a cap (12) for accessing the chamber (11) and the lateral fixing screw (8) of the machine tool (7), thus enabling it to be replaced easily. In the lower part of the suction support (10), and connected to it, can be found the unit (13) formed by the conical suction hood (14) and the internal sensing device (15). This unit (13) is easily detachable from the suction support (10) by means of any commonly known systems such as a thread, bayonet, etc.

Finally, and also on one side of the suction support, can be found a suction frame (16) on which are positioned two micrometers (17) used in the calibration of the retractable element. This retractable element is formed by the cylindrical unit (9) and the elements connected to it: the suction support (10), the unit (13) formed by the conical suction hood (14) and internal sensing device (15), the suction frame (16) and the associated micrometers (17), and also the suction pipe (4).

Between the securing cone (3) and the cylindrical unit (9) is disposed in a concentric manner the cylindrical spring (37), the pressure of which causes the cylindrical unit (9) and all the aforementioned retractable elements to be, in a state of rest, in the most distanced position from the support (1). On the external part of the cylindrical unit (9) is situated, in a concentric manner, the guide-column (18), connected to the support (1). Between the cylindrical unit (9) and guide-column (18) are disposed the appropriate bearings (19) enabling the smooth vertical movement of the retractable element. Logically, the entire tool holder unit is disposed with the appropriate internal lubrication channels for their correct operation. The lubrication valve (36) enables the provision of the appropriate lubrication material.

During the normal operating of this tool holder, the arm of the automatic machining system with numerical control is connected first of all by means of the securing cone (3), at the same time as the suction pipe (4) is simultaneously and automatically connected to the external ventilator, all correctly positioned with the assistance of the bolt (2). This process is performed by the arm of the machining system totally automatically. When it is positioned at the point to be machined, the arm presses the tool holder unit against the surface to be machined, resulting first of all in the conical suction function. As it goes deeper into the material a point is reached at which an internal sensing device (15), connected to the aforementioned retractable element, touches the surface of the material, with the result that, by overcoming the resistance of the spring (37), the entire unit of the retractable element recedes to a point at which the micrometers (17) associated to it activate end-of-stroke switches (21) connected to the arm (20) of the machining system, causing the machining operation to stop. The correct prior adjustment of the micrometers (17) enables the machining operation to be set accurately to a depth programmed in the machining system, regardless of the possible tolerances on the surface of the material. The use of two micrometers (17) provides the system with greater safety.

A tool holder with suction system not being part of the present invention may also be made for example, in a more simplified version, as a fixed version without a retractable element. In this case, as can be seen in the plan attached, it is essentially formed by a flat support (22), of appreciable thickness and variable elongated shape, to which is attached in its upper part a positioning bolt (2), the securing cone (3), which is the upper end of the main rotating axis, and the outlet of the suction pipe (4). The securing cone (24) may have the specific measurements and shapes of any of the different types of securing cone that are standard on the market. It is in these three elements that the connection with the arm of the automatic machining system is made

The securing cone (24) is provided with high-precision, low-sway rotary movement in relation to the support (22) by means of the appropriate internal bearings (26) positioned between the securing cone (24) and the cylindrical closure unit (27), connected to the support (22). In the hollow lower part of the bottom of the main shaft is housed the machine tool (28), it being held by the lateral fixing screw (29).

Attached to the lower part of the cylindrical closure unit (27) is the suction support (30), also of a hollow cylindrical shape and which forms the internal suction chamber (31) in its interior and around the lower end of the securing cone (24). Emerging laterally from this suction support (30) is the hollow suction pipe (25). This suction support (30) is also disposed with a cap (32) for accessing the chamber (31) and the lateral fixing screw (29) of the machine tool (28), thus enabling it to be replaced easily. In the lower part of the suction support (30), and connected to it, can be found the unit (33) incorporating the conical suction hood (34). This unit (33) is easily detachable from the support (22) by means of any commonly known systems such as a thread, bayonet, etc.

Logically, the entire tool holder unit is disposed with the appropriate internal lubrication channels for their correct operation. The lubrication valve (35) enables the provision of the appropriate lubrication material.

This fixed tool holder with suction operates in a similar way to the previous model except that, as it lacks the retractable element, in this case the depth of machining is, solely and exclusively, that controlled by the machining system.

The tool holder with suction system that is the object of this invention, may also be made in an alternative embodiment involving the replacement of the central and single guide-column (18), connected to the support (1) and situated concentrically between the securing cone (3) and the cylindrical unit (9) of the tool holder in its retractable version, with a plurality guide-columns (40) of a smaller diameter, preferably three, distributed in the shape of a circular matrix around the securing cone (38), and being provided with the corresponding anti-friction elements (41), preferably in the form of bearings, and with the corresponding internal springs (42) in order to favour the rest state of the cylindrical unit (39).

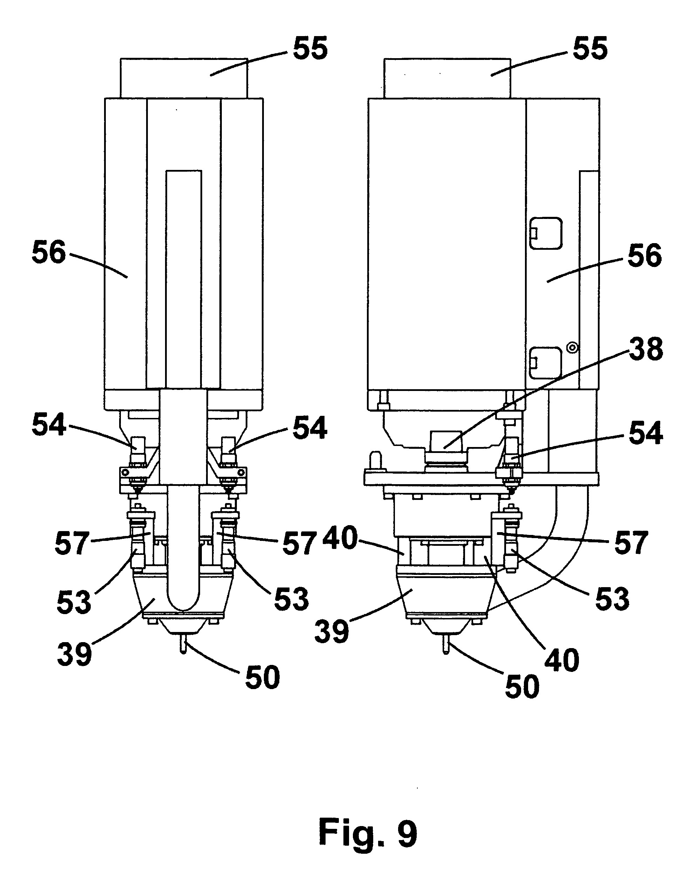

As in other embodiments the tool holder is also provided with various, preferably two, associated micrometric head units (53) and end-of-stroke micro switches (54) for adjusting the depth, the micrometric head units (53) normally being connected to the cylindrical unit (39), or mobile part, by means of fastening plates (57), and the electrical micro circuit-breakers (54) being installed on the upper fixed plate of the tool holder. We may find an example of these relative positions in Figure 9, in which we can also see how the tool holder is connected to the motor arm of the machine or spindle (55), and the suction pipe is connected to the extractor system (56).

The conical suction hood (14,34), characteristic of this invention, permits various embodiments, applicable both to the fixed and retractable tool holder model in both versions, being formed in the preferred embodiment by a brush with a tapered shape, consisting of one or more rows of individual flexible fibres with a preferably cylindrical section. In an alternative embodiment the conical suction hood (14, 34) is formed by a rigid or semi-rigid tapered piece, optionally provided with a plurality of complementary drill holes for the intake of air.

## Claims

1. Tool holder with suction system of the type used in automatic machining systems with numerical control for the adaptation and securing of different machining tools (7), integrating in a single device a fixed-type precision tool holder with a suction system for the waste generated during machining, wherein an internal cylindrical suction chamber (11) is formed between a suction support (10) and a securing cone (3), **characterized in that**
a retractable element is formed by a cylindrical unit (9) concentrically disposed on the securing cone (3), wherein the suction support (10), a conical suction hood (14), an internal sensing device (15), a suction frame (16) with associated micrometers (17) and the suction pipe (4) are connected to the cylindrical unit (9) and
wherein the micrometers (17) allowing adjustement of a predefined machining depth are associated with end-of-stroke switches (21) connected to an arm (20) of the machining system.

2. Tool holder with suction system according to the preceding claim, wherein the conical suction hood (14, 34, 44) is detachable and interchangeable.

3. Tool holder with suction system according to one of the preceding claims, wherein the conical suction hood (14, 34, 44) is formed by a brush with a tapered shape, consisting of one or more rows of individual flexible fibres with a preferably cylindrical section.

4. Tool holder with suction system according to one of the preceding claims, wherein the conical suction hood (14, 34, 44) is formed by a rigid or semi-rigid tapered piece, optionally provided with a plurality of complementary drill holes for the intake of air.

5. Tool holder with suction system according to one of the preceding claims, wherein it incorporates a plurality of guide-columns (40) of a smaller diameter, preferably three, distributed in the shape of a circular matrix around the securing cone (38), in replacement of the central and single guide-column (18), connected to the support (1) and situated concentrically between the securing cone (3) and the cylindrical unit (9) of the tool holder in its retractable version, each of the guide-columns being provided with the corresponding anti-friction elements (41), preferably in the form of bearings, and with the corresponding internal springs (42) in order to favour the rest state of the cylindrical unit (39).

## Patentansprüche

1. Werkzeughalter mit Absaugsystem, der in automatischen Zerspanungssystemen mit numerischer Steuerung zur Anpassung und Befestigung verschiedener Zerspanungswerkzeuge (7) verwendet wird und der in einer einzigen Vorrichtung einen feststehenden Präzisions-Werkzeughalter mit einem Absaugsystem für die während der Zerspanung anfallenden Abfälle integriert, wobei eine innere zylindrische Saugkammer (11) zwischen einem Saugträger (10) und einem Befestigungskonus (3) gebildet wird, **dadurch gekennzeichnet, dass**
ein einziehbares Element von einer zylindrischen Einheit (9) gebildet wird, das konzentrisch auf dem Befestigungskonus (3) angeordnet ist, wobei der Saugträger (10), eine konische Absaughaube (14), ein inneres Fühlerelement (15), ein Saugrahmen (16) mit zugeordneten Mikrometern (17) und das Saugrohr (4) mit der zylindrischen Einheit (9) verbunden sind und
wobei den Mikrometern (17), welche die Einstellung einer vordefinierten Bearbeitungstiefe ermöglichen, Endlagenschalter (21) zugeordnet sind, die mit einem Arm (20) des Zerspanungssystems verbunden sind.

2. Werkzeughalter mit Absaugsystem nach dem vorhergehenden Anspruch, wobei die konische Absaughaube (14, 34, 44) abnehmbar und austauschbar ist.

3. Werkzeughalter mit Absaugsystem nach einem der vorhergehenden Ansprüche, wobei die konische Absaughaube (14, 34, 44) durch eine Bürste mit einer konischen Form gebildet wird, die aus einer oder mehreren Reihen individueller, flexibler Fasern mit einem vorzugsweise zylindrischen Querschnitt besteht.

4. Werkzeughalter mit Absaugsystem nach einem der vorhergehenden Ansprüche, wobei die konische Absaughaube (14, 34, 44) durch ein starres oder halbstarres konisches Teil gebildet wird, das optional mit einer Vielzahl von komplementären Bohrlöchern für den Einlass von Luft versehen ist.

5. Werkzeughalter mit Absaugsystem nach einem der vorhergehenden Ansprüche, wobei er mehrere Führungssäulen (40) mit einem kleineren Durchmesser enthält, vorzugsweise drei, die als Ersatz für die zentrale und einzige Führungssäule (18) um den Befestigungskonus (38) herum verteilt, mit dem Träger (1) verbunden und konzentrisch zwischen Sicherungskonus (3) und der zylindrischen Einheit (9) des Werkzeughalters in seiner einziehbaren Version angeordnet sind, wobei jede der Führungssäulen mit den entsprechenden Gleitelementen (41), vorzugsweise in Form von Lagern, und mit den entsprechenden inneren Federn (42) versehen ist, um den Ruhezustand der zylindrischen Einheit (39) zu begünstigen.

## Revendications

1. Un porte-outil avec système d'aspiration du type de ceux utilisés dans les systèmes d'usinage automatiques à contrôle numérique pour l'adaptation et la sécurisation de différents outils d'usinage (7) comprenant, dans un seul dispositif, un porte-outil de précision de type fixe avec un système d'aspiration pour l'aspiration des déchets générés pendant l'usinage, où une chambre d'aspiration cylindrique interne (11) est formée entre un support d'aspiration (10) et un cône de sécurisation (3), **caractérisé en ce que**
un élément rétractable est formé par une unité cylindrique (9) disposée de manière concentrique sur le cône de sécurisation (3), où le support d'aspiration (10), un capot d'aspiration conique (14), un dispositif de detection interne (15), un cadre d'aspiration (16) avec micromètres associés (17) et le conduit d'aspiration (4) sont reliés à l'unité cylindrique (9) et
où les micromètres (17), permettant l'ajustement d'une profondeur d'usinage prédéfinie, sont associés à des interrupteurs de fin de course (21) connectés à un bras (20) du système d'usinage.

2. Un porte-outil avec système d'aspiration conformément à la revendication précédente où le capot d'aspiration conique (14, 34, 44) peut être détaché et interchangé.

3. Un porte-outil avec système d'aspiration conformément à l'une des revendications précédentes où le capot d'aspiration conique (14, 34, 44) est composé d'une brosse de forme conique composée d'une ou de plusieurs rangées de fibres flexibles individuelles avec, de préférence, une section cylindrique.

4. Un porte-outil avec système d'aspiration conformément à l'une des revendications précédentes où le capot d'aspiration conique (14, 34, 44) est composé d'une pièce conique rigide ou semi-rigide, munie optionnellement d'une multitude de trous de perçage complémentaires pour l'arrivée d'air.

5. Un porte-outil avec système d'aspiration conformément à l'une des revendications précédentes comprenant une pluralité de colonnes-guides (40) d'un diamètre inférieur, de préférence au nombre de trois, réparties sous forme d'une matrice circulaire autour du cône de sécurisation (38), en remplacement de l'unique colonne-guide centrale et unique (18) connectées au support (1) et situées de manière concentrique entre le cône de sécurisation (3) et l'unité cylindrique (9) du porte-outil dans sa version rétractable, chacune des colonnes-guides étant munie des éléments antifrictions correspondants (41), de préférence sous forme de roulements, et des ressorts internes correspondants (42) afin de favoriser l'état de repos de l'unité cylindrique (39).
